# EUROPÄISCHE PATENTSCHRIFT

(11) **EP 1 703 351 B1**
(45) Veröffentlichungstag und Bekanntmachung des Hinweises auf die Patenterteilung: **11.05.2016**
(21) Anmeldenummer: 06005346.9
(22) Anmeldetag: 16.03.2006
(51) Int. Cl.: G05B 19/418, G05D 1/02

(54) **Verfahren zum Betrieb eines Werkstück-Transfersystems**
Method for operating a workpiece transfer system
Procédé de mise en oeuvre d'un système de transfert de pièces

(30) Priorität: 18.03.2005 DE 102005012561
(43) Veröffentlichungstag der Anmeldung: 20.09.2006
(73) Patentinhaber: Beer, Christian, 6858 Schwarzach (AT)
(72) Erfinder: Beer, Christian, 6858 Schwarzach (AT)
(74) Vertreter: Riebling, Peter

(56) Entgegenhaltungen:
- DE-A1- 10 142 606
- DE-A1- 19 532 281
- DE-A1- 19 842 752

## Beschreibung

Die Erfindung betrifft ein Verfahren zum Betrieb eines Werkstück-Transfersystems nach dem Oberbegriff des Patentanspruchs 1.

Ein solches Verfahren ist mit dem Gegenstand der DE 198 42 753 A1 bekannt geworden. Über eine Steuerung dieses Transfersystems mit einem Werkstückträger ist jedoch dort nichts ausgesagt.

Ein weiteres Transfersystem ist mit dem Gegenstand der DE 195 32 281 A1 bekannt geworden. Bei diesem bekannten Transfersystem handelt es sich um ein bahngeführtes System, bei dem die entsprechenden Werkstückträger entlang der Bahn in Nuten auf einer Platte fahren, welche modulartig aus Einzelplatten zusammengesetzt ist. Dieser bekannte Werkstückträger weist einen Schreib-Lesekopf für den Datenaustausch auf, mit dem der Werkstückträger mit zugeordneten, einzelnen, auf der Bahn verteilten, feststehenden Schreib-Leseköpfen kommuniziert. Ferner sind auf dem bekannten Werkstückträger ein oder mehrere Entfernungssensoren angeordnet, um eine Kommunikation der einzelnen Werkstückträger, die hintereinander folgend auf der Bahn fahren, zu ermöglichen. Es soll dadurch ein Auffahren von einzelnen Werkstückträgern verhindert werden, so dass ein Staubetrieb dieser Werkstückträger auf dem Transfersystem möglich ist.

Nachteil des bekannten Transfersystem ist jedoch, dass die Datenladestationen in Form der bekannten Schreib-Leseköpfe über die Bahn verteilt angeordnet sind, wodurch ein außerordentlich hoher Programmieraufwand und Schaltungsaufwand entsteht. Praktisch jeder Bearbeitungsstation ist ein derartiger Schreib-Lesekopf zugeordnet, wodurch der Nachteil entsteht, dass vor jeder Bearbeitungsstation erst die erforderlichen Informationen eingeholt werden müssen, um dem Werkstückträger mitzuteilen, welche Steuerungsvorgänge von ihm erwartet werden und welche Bearbeitungsvorgänge von der Bearbeitungsstation auszuführen sind. Die bekannten Werkstückträger haben nur eine begrenzte Intelligenz, denn sie sind nicht frei programmierbar, d. h. sie müssen sich individuell vor jeder Bearbeitungsstation ihre entsprechenden Informationen und Steuerbefehle einholen. Es ist z. B. nicht möglich, einem Werkstückträger im voraus ein bestimmtes Fahrverhalten über die gesamte Strecke hinweg gesehen zuzuordnen, z. B. auch eine bestimmte Fahrpriorität. Die Anordnung von Schreib-Leseköpfen setzt im übrigen voraus, dass der Werkstückträger in genauer Gegenüberstellung zu einem feststehenden Schreib-Lesekopf angeordnet wird, um überhaupt eine Informationsübertragung zu gewährleisten. Dies ist allerdings mit dem Nachteil verbunden, dass eine vorausschauende Steuerung des Werkstückträgers in Verbindung mit Komponenten des Transfersystems nicht möglich ist. Beispielsweise ist es bei diesem Werkstückträger nicht möglich, dass er vorausschauend Weichen und andere Steuerelemente auf der Strecke drahtlos ansteuert, um bei seiner Annäherung eine bestimmte Konstellation des Transfersystems vorzufinden. Die Anordnung derartiger Schreib-Leseköpfe hat also den wesentlichen Nachteil, dass an jeder Informationsübertragung der Werkstückträger angehalten werden muss, um eine genaue gegenüberliegende Positionierung des Werkstückträgers zu erreichen, um die Informationsübertragung zu gewährleisten.

Dies verhindert einen schnellen Fahrbetrieb auf dem Transfersystem und eine Informationsübertragung mit hoher Informationsdichte.
Der Erfindung liegt deshalb die Aufgabe zugrunde, ein Verfahren zum Betrieb eines Werkstück-Transfersystems nach dem Oberbegriff des Patentanspruches 1 so weiterzubilden, dass ein wesentlich geringerer Programmieraufwand erforderlich ist.

Insbesondere soll das Erstellen von Arbeits- bzw. Prozessschritten ohne einen wesentlichen Programmieraufwand oder eine dafür speziell ausgebildete Person möglich sein.

Zur Lösung der gestellten Aufgabe wird ein Verfahren angewendet, bei dem das Transfersystem mittels einer Steuerungssoftware konfigurierbar ist, wobei die Konfigurierung auf ein virtuelles, über die Bearbeitungsstationen gelegtes Rastersystem aufgebaut ist, das den Verkehrsregeln eines Straßensystems einer Großstadt entspricht.

Darüber hinaus ist das Verfahren durch nachfolgende Arbeitsschritte gekennzeichnet:
1. Definition der Parameter jeder einzelnen Bearbeitungsstation und gegebenenfalls jeder Weiche, sofern vorhanden;
2. Definition der Lage-Punkte der Bearbeitungsstation nach Ziffer 1 über ein Straßensystem durch Legen eines virtuellen Rastersystems einer Straßenkarte über die Bearbeitungsstationen und Weichen;
3. Definition des Straßensystems, so dass bestimmte Straßenverkehrsregeln einzuhalten sind;
4. Konfigurierung der einzelnen Bearbeitungsstationen und Weichen einmalig durch Herstellen einer Datenverbindung mit einem Leitrechner, so dass die einzelnen Straßenkreuzungen, Blocks und Businessstraßen festgelegt werden;
5. Entfernen der Datenverbindung zu den einzelnen Bearbeitungsstationen und Herstellen einer Datenverbindung zu mindestens jeweils einem Werkstückträger;
6. Einspeisen des Bearbeitungsprogramms auf dem Werkstückträger;
7. Start des Werkstückbearbeitungssystems mit Zuführung der einzelnen Werkstückträger an die Bearbeitungsstationen, ohne Datenverbindung zwischen der Bearbeitungsstation und dem Leitrechner mit Ausnahme gegebenenfalls einer einzigen als Rückmeldestation;
8. Übergabe von Bearbeitungsdaten von einem Werkstückträger an einen Leitrechner zu Kontrollzwecken.

Mit der gegebenen technischen Lehre ergibt sich der wesentliche Vorteil, dass nun ein autonomes Werkstückbearbeitungssystem verwirklicht wird, so wie es im Rahmen der älteren Patentanmeldung DE 198 42 752 bereits schon beschrieben wurde.

Im Rahmen der vorliegenden Erfindung soll dieses autonome Werkstückbearbeitungssystem in Verbindung mit dem hierbei entstehenden, geringen Programmieraufwand geschützt werden.

Zur Programmierung dieses Systems ist es wesentlich, dass
1. der Werkstückträger eine autonome Intelligenz hat,
2. das verwendete Straßen- und Blocksystem (nachgebildet nach dem Straßensystem von Manhattan) feste Verkehrsregeln definiert, welche das Verhalten der Werkstückträger vor und nach der Bearbeitungsstation regeln,
3. ein Zeitersparnis und eine wesentliche Einsparung von Programmieraufwand durch Ziehen und Fallenlassen von Symbolen, die jeweils einer Bearbeitungsstation zugeordnet sind auf eine Benutzeroberfläche, wodurch der zeitliche Ablauf der Konfiguration der einzelnen vom Benutzer zu konfigurierenden Bearbeitungsstationen wesentlich vermindert wird.

Durch die Verwendung eines dem Straßensystem von Manhattan nachgebildeten Straßensystem, welches als Koordinatensystem über die Fahrstrecke gelegt wird, ergeben sich wesentliche Vorteile.

Nachdem durch das Manhattan-Straßensystem bestimmte Regeln einzuhalten sind, müssen diese Regeln bei der Programmierung nicht mehr eigens beachtet werden.

### Solche Regeln sind folgende:

### Aufbau des Gitters (Layouts):

- Streets: Sind die waagerechten Linien, Beginnen bei 1 und steigen um 1 nach oben. Die 1. Street beginnt links unten und verlaufen nach links. Auf einer geraden Street steigen die Nummern der Avenues!
- Avenues: Sind die senkrechten Linien, Beginnen bei 1 und steigen um 1 nach rechts. Die 1. Avenue beginnt links unten und verlaufen nach oben Auf einer ungeraden Avenue steigen die Nummern der Streets!
- Block: Ist ein Rechteck, dass sich zwischen zwei Streets und zwei Avenues bildet.
- Business-Street: Ist eine Ausschleusung, die innerhalb eines Blockes wieder in die Street zurück führen muss.

### Generierung der Haus-Nummer:

▪ Direkt auf einer Avenues oder Streets können pro Block nur die Nummern 01 - 09 sein. Die Nummern steigen in Fahrtrichtung.
▪ Auf Business-Streets, die links von einer Ave/Str liegen, sind alle Hs-Nr. ungerade (Zehnerstelle 11-19, 31-39, ...)
▪ Auf Business-Streets, die rechts von einer Ave/Str liegen, sind alle HS-Nr. gerade (Zehnerstelle 21-29, 41-49, ...)

Es ist dabei nicht wichtig, von wo aus links oder rechts ist, wichtig ist nur, dass in einem Block auf der einen Seite gerade Hausnummern und auf der anderen Seite ungerade Hausnummern sind.

**Gültige Bereiche der einzelnen Elemente:**

| | | |
|---|---|---|
| City: | 1-15 | Kennung eines Systems |
| Level: | 1-15 je City | Stockwerk eines Systems |
| Über (Kreuzung): | 1-99 je City | über welche Str/Ave die Station erreicht wird |
| Haus-Nr.: | 1-99 je Block | Hausnummer der Station |
| Streets: | 1-99 je City | ) |
| Avenues: | 1-99 je City | ) - auf welcher Str/Ave/B-Str.die Station liegt |
| Business-Str.: | 1-9 je Block | ) |
| Operation: | S,G,M,F | Sequentiell, Gleichgültig, Mehrfach, Fix |
| BA-Code: | 1-255 | Bearbeitungs-Code für die Maschine |
| Index: | 1-15 je Operation | Für das Kombinieren von G und M-Operation |

**Aufbau der Adresse einer Station:**

| | |
|---|---|
| Str/Ave-Nr.: | auf welcher Ave oder Str sich die Station befindet |
| City/Level: | in welcher City/Level sich die Station befindet |
| Haus-Nr.: | die Hausnummer der Station |
| Cross bevor: | ist die Str oder Ave der Kreuzung zuvor |
| Str/Ave-Typ: | auf welcher Ave oder Str sich die Station befindet |

**Aufbau der Adresse einer Weiche:**

| | |
|---|---|
| Str/Ave/B-Str-Nr.: | welche Ave/Str oder Business-Str. gerade nach der Weiche kommt |
| City/Level: | welche City/Level nach der geraden Weiche kommt |
| Str/Ave/B-Str-Nr.: | welche Ave/Str oder Business-Str beim Abbiegen nach der |
| | Weiche kommt |
| City/Level: | welche City/Level nach dem Abbiegen der Weiche kommt |
| Str/Ave/B-Str-Typ: | ob eine Ave/Str oder Business-Str. beim gerade/Abbiegen nach der Weiche kommt |

Wenn auf eine B-Str. abgebogen wird, steht im "abbiege City/Level Teil" die Kreuzung zuvor.

**Aufbau der Adresse einer Einmündung:**

| | |
|---|---|
| Str/Ave/B-Str-Nr.: | welche Ave/Str oder Business-Str. nach der Einmündung kommt |
| City/Level: | welche City nach der Einmündung kommt |
| Str/Ave/B-Str-Typ: | ob eine Ave/Str oder Business-Str. nach der Einmündung kommt |

Vorteil des genannten Manhattan-Verkehrssystems, welches als Koordinatensystem über das Werkstück-Transfersystem gelegt ist, dass nun bestimmte Verkehrsregeln eingehalten werden müssen und hierdurch der Programmieraufwand geringer wird.

Eine solche Verkehrsregelung ist beispielsweise:
1. Das Transfersystem soll nur im Uhrzeigersinn befahren werden.
2. Geradzahlige Avenues verlaufen von Norden nach Süden als Einbahnstraßen und ungeradzahlige Avenues verlaufen von Süden nach Norden ebenfalls als Einbahnstraßen.
3. Die senkrecht zu den Avenues verlaufenden Streets kreuzen sich mit den Avenues und bilden dort Blocks.

Geradzahlige Streets verlaufen von Westen nach Osten und ungeradzahlige Streets verlaufen von Osten nach Westen und sind jeweils wiederum als Einbahnstraßen ausgebildet.

Zwischen den Blocks gibt es Überbrückungsstraßen, sogenannte Business-Straßen, welche im Block zwei Bearbeitungsstationen überbrücken können. Sie bilden als Bypässe zu den Hauptfahrstraßen.

Auch diese Businessstraßen sollen nur im Uhrzeigersinn (in Richtung der Hauptfahrstraßen) durchfahren werden können.

Der Programmieraufwand wird deshalb einfacher, weil es damit festgelegte Regeln gibt, wie ein Werkstückträger mit einer eigenen autonomen Intelligenz und der dazugehörenden Steuerungssoftware von einer Bearbeitungsstation zur anderen gelangt.

Diese festlegenden Regeln, die allen Werkstückträgern einprogrammiert werden können, führen dazu, dass verbotene Straßen nicht befahrbar sind und dass sich alle Werkstückträger an die Verkehrsregeln halten müssen.

Damit ist es für einen Programmierer, der früher solche Fahrstrecken frei programmieren musste, wesentlich einfacher, eine Fahrstrecke vorzugeben, denn er braucht nur eine Koordinate einer Bearbeitungsstation oder einer Weiche in Form einer Straßenadresse (Kreuzung 9. Straße, 5. Avenue) mitzuteilen und der Werkstückträger, der diese Bearbeitungsstation anfahren muss, weiß nun aufgrund seiner eingebauten Intelligenz, wie er im Straßensystem zu dieser Bearbeitungsstation kommt.
Aus diesem Grunde gibt es eine gewisse Kommunikation zwischen den einzelnen Werkstückträgern, jedoch nur in der Weise, dass eine Distanzmessung von dem jeweils hinten fahrenden Werkstückträger in Richtung auf den vorhergehenden Werkstückträger erfolgt. Es ist nicht ein vollständiger Datenaustausch zwischen den einzelnen Werkstückträgern notwendig, was wiederum den Programmieraufwand und die dazugehörende Steuerung wesentlich vergrößern würde.
Somit kann sich der hintenfahrende Werkstückträger darauf verlassen, dass der vor ihm fahrende Werkstückträger sich an die "Verkehrsregeln" hält.
Er wird aufgrund seiner Distanzmessung nicht auf den vorderen auffahren und wenn der vor ihm fahrende Werkstückträger eine Bearbeitungsstation anfährt, wird der dahinter fahrende Werkstückträger aufgrund des ihm eingespeicherten Straßensystems eine Umleitung suchen.

Aufgrund der autonomen Intelligenz der einzelnen Werkstückträger und aufgrund der Definition eines Straßennetzes mit einzelnen Verkehrsregeln wird schon einmal eine wesentliche Vereinfachung des Programmieraufwandes erreicht.
Eine weitere Vereinfachung wird durch eine besondere Konfigurierung der einzelnen Bearbeitungsstationen erzielt:
In einer Konfigurierungsphase muss zunächst einmal über eine Datenverbindung jeder Bearbeitungsstation mitgeteilt werden, wo sie im Straßensystem liegt und welche Aufgaben sie zu erfüllen hat.

Es ist jedoch nicht zwangsläufig notwendig, bereits schon die Art der Bearbeitungsstation dem Konfigurationsrechner mitzuteilen. Dies kann auch in einem späteren Schritt geschehen.

Aus Vereinfachungsgründen für eine vereinfachte Beschreibung wird jedoch im Folgenden davon ausgegangen, dass bei der Konfiguration auch gleich die Art und Ausführung der Bearbeitungsstation vom Leitrechner dieser Bearbeitungsstation mitgeteilt und einprogrammiert wird.

Auf diese Weise sind somit alle Bearbeitungsstationen und alle Weichen fest in dem Straßensystem integriert und jeder hat eine eindeutige, unverrückbare Straßenadresse.

Vorteil dieser Maßnahme ist, dass eine schnelle Umkonfiguration des gesamten Systems möglich ist. Baut man beispielsweise weitere Bearbeitungsstationen über weitere Fahrstrecken an, so ist es einfach möglich, auch diesen Bearbeitungsstationen einfach eine Straßenadresse und eine Bedeutung zuzuordnen.

Nachdem alle in einem feststehenden Straßensystem orientiert eingebaut sind, ist es deshalb für ein Steuerungsprogramm im Werkstückträger besonders einfach, diese Straßenadressen anzufahren, weil auch in dem Werkstückträger das Straßensystem einprogrammiert ist, und zwar mit allen Verkehrsregeln, die dazu gehören.

Ebenso ist es möglich, neben einem einzigen Fahrstraßensystem (Stadt=City) auch ein vollkommen davon getrenntes weiteres Fahrstraßensystem zu konfigurieren, wodurch dasselbe Straßensystem (Manhattan) einer zweiten Stadt zugeordnet wird.

In einer dritten Ausgestaltung ist es möglich, unterschiedliche Fahrstraßensysteme in einer einzigen Stadt zu konfigurieren. Diese Systeme können entweder in Fahrverbindungen miteinander verbunden sein und bilden dann verschiedene Ebenen (Level) oder sie können auch vollkommen autonom ohne Fahrverbindung miteinander arbeiten.

Auf diese Weise ist das System beliebig und (endlos) erweiterbar.

Zusammenfassend wird nochmals festgestellt, dass die Zeitersparnis beim Programmieren dadurch entsteht, dass zunächst jeder Bearbeitungsstation-vollkommen unabhängig von ihrer Lage im Straßensystem - eine bestimmte Bearbeitungsprozedur zugeordnet wird. Es gibt daher Bearbeitungsstationen mit der Bezeichnung "Teile einheben", "Dichtmasse aufbringen", "Getriebe einbauen", "Schrauben einsetzen", "Kleben" usw.

Wichtig ist, dass bei der Programmierung dieser Bearbeitungsstationen nur der jeweiligen Bearbeitungsstation eine bestimmte Bearbeitung zugeordnet wird, wie z. B. Dichtmasse aufbringen, Getriebe einbauen, Schrauben einsetzen und dergleichen mehr.

Es ist jedoch notwendig, die Straßenadressen und dergleichen vorzusehen. Dies erfolgt nur in der Konfigurationsphase.

Bei der Ausführung des Fahrstraßensystems nach der Erfindung reicht es nun aus, aus einem Bearbeitungs-Stationen-Pool, in dem alle gewünschten Bearbeitungsstationen definiert sind, diese auf eine Benutzeroberfläche zu ziehen und in einer bestimmten Reihenfolge aneinander anzufügen.

Wichtig hierbei ist, dass die Reihenfolge, in der der Benutzer die einzelnen Bearbeitungsstationen hintereinander liegend anfügt, auch den zeitlichen Ablauf der einzelnen Bearbeitungsstationen definiert.

Nun hat der Benutzer eine Vielzahl von Optionen, die Bearbeitung eines Werkstückes durch Beeinflussung der Benutzeroberfläche zu steuern.

Eine erste Möglichkeit ist, dass er mehrere parallele Stationen anbringt, um festzulegen, dass wenn der Werkstückträger die eine Station als besetzt vorfindet, er zu einer gleichartigen, anderen Station fahren kann.

Ferner können den einzelnen Bearbeitungsstationen bestimmte Bedeutungsinhalte zugeordnet werden, nämlich z. B. dass diese Bearbeitungsstationen unbedingt in der zeitlich angegebenen Reihenfolge durchlaufen werden müssen, während andere Bearbeitungsstationen in einem zeitlich beliebigen Reihenfolge durchlaufen werden können.

Als weitere Ausführungsform sieht die Erfindung vor, dass sogenannte Reparaturstationen vorgesehen werden. Diese Reparaturstationen sind Stationen, die ebenfalls im Straßensystem integriert sind und die dann von Fall zu Fall angefahren werden, wenn der Werkstückträger von der Bearbeitungsstation die Mitteilung erhält, dass das auf ihm bearbeitete Werkstück nicht norm- oder wunschgerecht bearbeitet wurde.

Er fährt dann eine Reparaturstation an und dort wird eine entsprechende Reparatur ausgeführt.

Nach Ausführung der Reparatur wird der Werkstückträger mit seinem darauf gelagerten und reparierten Werkstück wieder in das Straßensystem der Hauptstraße zurückgeführt.

Wichtig hierbei ist, dass der Programmieraufwand nun dadurch verringert wird, dass der Benutzer, welcher die einzelnen Symbole für die Bearbeitungsstationen auf der Benutzeroberfläche zieht, nicht wissen muss, wo die Bearbeitungsstationen liegen. Dies ist vorher den Bearbeitungsstationen in den Koordinaten des Straßensystems eingegeben worden und der Benutzer muss sich mit der Lage und Anordnung der Bearbeitungsstationen in keinster Weise beschäftigen.

Es reicht deshalb aus, aus einem Pool von Bearbeitungsstationen die entsprechenden Symbole der Bearbeitungsstationen auf eine Benutzeroberfläche zu ziehen und diese in der gewünschten zeitlichen Reihenfolge anzuordnen.

Nach der erfolgten Anordnung der einzelnen Beiriebsstationen auf der Benutzeroberfläche wird ein Startsignal gegeben und ein Werkstückträger fährt an eine einzige Bearbeitungsstation und nimmt dort die Daten des Steuerungsprogramms auf, was quasi dem Arbeitsauftrag entspricht, welche Arbeiten er zu erledigen hat.

Die Einprogrammierung des Steuerungsprogramms erfolgt also einmal für die gesamte Betriebsdauer des gesamten Transfersystems, vorausgesetzt, es werden immer die gleichen Gegenstände hergestellt und verarbeitet.

Nach der Übernahme seines Arbeitsprogramms fährt der Werkstückträger nun selbsttätig auf dem Straßensystem unter Berücksichtigung der Straßenverkehrsregeln und sucht die erste ihm vorgeschriebene Bearbeitungsstation.

Nachdem er diese gefunden hat, erfolgt die entsprechende Bearbeitung des von ihm getragenen Werkstücks und nach der erforderlichen Bearbeitungszeit bekommt er ein Startsignal, um die nächste Bearbeitungsstation anzufahren und zu suchen.

Eventuelle Hindernisse in seiner Strecke erkennt er aufgrund der Distanzmessung zu dem vor ihm laufenden Werkstückträger. Ansonsten erfolgt eine Plausibilitätsprüfung für die nächste zu findende Bearbeitungsstation in der Weise, dass er nicht entgegen von Einbahnstationen fahren darf, dass er nicht entgegen der Fahrtrichtung fahren darf, dass er bevorzugt keine Business-Straßen (Bypässe) benutzen darf, dass er keine Umwege fahren sollte und dergleichen mehr.

Kommt es zu Wartezeiten vor Bearbeitungsstationen, dann wartet der Werkstückträger um eine bestimmte vorgegebene Zeit, ist diese Zeit überschritten, sucht er autonom seinen Weg zu einer nächsten gleichartigen Bearbeitungsstation, die irgendwo anders im Straßensystem angeordnet ist.

Vergleichbar ist der gesamte Arbeitsablauf mit einem Taxifahrer in New York, der bestimmte Fahrgäste von einer Station zu einer anderen bringen soll und möglichst verkehrsarme Straßen sucht und sich hierbei möglichst an die Verkehrsregeln hält.

Nichts anderes wird für das erfindungsgemäße Programm für die Steuerung der Bewegungen der Werkstückträger vorgesehen.

Es zeigen:
- Figur A:: ein Transferstraßensystem nach dem Stand der Technik;
- Figur 1:: schematisiert die Anordnung unterschiedlicher Fahrstraßensysteme in unterschiedlichen Gebieten;
- Figur 2:: schematisiert ein Fahrstraßensystem nach der Erfindung;
- Figur 3:: das Fahrstraßensystem nach Figur 2 in vereinfachter Ausführung während der Konfigurierphase;
- Figur 4:: das Fahrstraßensystem nach Figur 3 in der Arbeitsphase,
- Figur 5:: ein Eingabefenster zur Zuordnung von Eigenschaften zu einer Bearbeitungsstation;
- Figur 6:: der Bearbeitungs-Stationen-Pool für die Bearbeitungsstationen;
- Figur 7:: die Benutzeroberfläche für einen Benutzer zur Programmierung des erfindungsgemäßen Fahrstraßensystems.

Anhand einer Ausführung nach dem Stand der Technik wird in Figur A ein grundsätzliches Fahrstraßensystem erläutert.

Dort ist angegeben, dass ein Leitrechner 1 über dauernde Datenverbindungen 11, 12, 13, die bidirektional arbeiten, mit allen Bearbeitungsstationen 6-10 verbunden ist.

Es sind nur beispielhaft 5 Bearbeitungsstationen angegeben, obwohl viel mehr Bearbeitungsstationen vorhanden sein könnten und die auch in anderer Weise verteilt sein könnten.

Auf der Fahrstrecke 2 sind hierbei schienengebunden mehrere Werkstückträger 4, 5 angeordnet, von denen die aus Einfachheitsgründen nur die beiden genannten WS-Träger 4, 5 gezeichnet sind. Diese befahren beispielsweise in Pfeilrichtung 3 die Fahrstrecke 2.

Wichtig ist nun beim Stand der Technik, dass ständig eine bidirektionale Datenverbindung 11, 13 zwischen allen Bearbeitungsstationen 6-10 und dem Leitrechner 1 vorhanden sein muss. Dies bedeutet einen immensen Programmieraufwand, denn zur Programmierung der Bearbeitung eines Werkstückes auf dem WS-Träger 4, 5 ist es zunächst notwendig, in der Konfigurationsphase jede Bearbeitungsstation 6-10 ihre Koordinate, ihre Art der Anwendung und der Bearbeitung und sonstige Parameter mitzuteilen.

Nach der Durchführung der Konfigurationsphase bleibt jedoch die Datenverbindung 11, 12, 13 aufrecht erhalten, was bedeutet, dass der Programmierer ständig mit seinem Programm die Bearbeitung der einzelnen Bearbeitungsstationen 6, 7-10 überwachen muss.

Es erfolgen deshalb ständig Rückmeldungen zwischen den Bearbeitungsstationen 6-10 zu dem Leitrechner 1 über die bidirektionalen Datenverbindungen 11-13, um zu überprüfen, was der Werkstückträger 4, 5 an der Bearbeitungsstation ausführt, ob die Ausführung richtig ist, ob Unterbrechungen oder Programmänderungen vorgenommen werden müssen oder ob andere Parameter eingelesen werden müssen.

Der Programmieraufwand muss bei jedem Wechsel der Bearbeitungsstation von neuem vorgenommen werden, wobei alle anderen Bearbeitungsstationen jeweils wiederum ebenfalls mit in die Programmierung einbezogen werden müssen.

Es muss also ständig auch der Ablauf zwischen den einzelnen Programmierstationen neu programmiert werden, wenn eine einzige Bearbeitungsstation in ihrer Funktion oder in ihrer Bearbeitungsdauer geändert wird.

Aufgrund der ständigen Datenverbindungen 11-13 mit dem Leitrechner 11 und der entsprechenden Kontrollarbeiten und Rückmeldungen ist das vom Leitrechner zu verwaltende Programm außerordentlich komplex, entsprechend störungsanfällig und nur mit sehr hohem Aufwand herzustellen und zu ändern.

Übliche Programmierzeiten für die Programmierung eines üblichen Fahrstraßensystems liegen im Bereich von mehreren Wochen.

Hier setzt die Erfindung ein und sieht ein wesentlich einfacheres Programmiersystem und eine wesentlich einfachere Steuerung vor.

Dies wird anhand der folgenden Figuren näher erläutert:

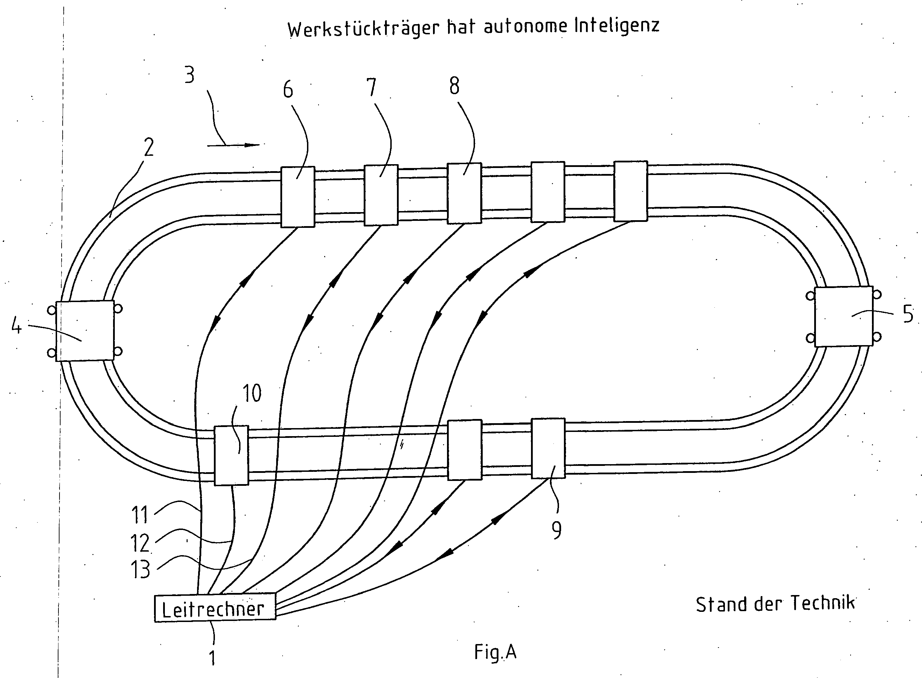

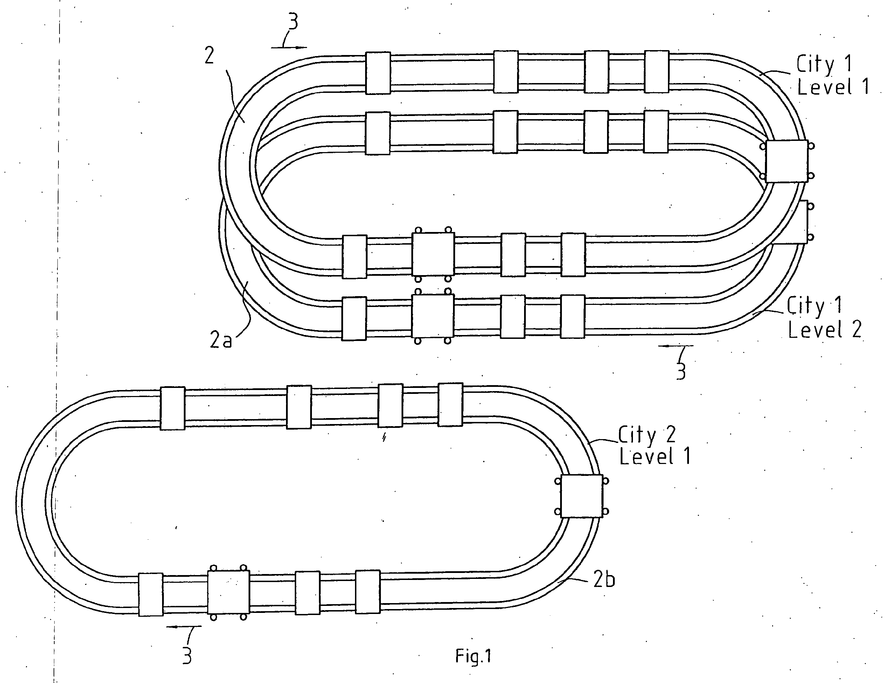

In Figur 1 ist - unter Bezugnahme auf die allgemeinen Erläuterungen im allgemeinen Beschreibungsteil - dargestellt, dass eine Fahrstrecke 2 in einer City 1 auf einem Level 1 vorhanden sein könnte und in der gleichen Stadt könnte auch ein zweiter Level mit einer Fahrstrecke 2a vorhanden sein, wobei die Werkstückträger 4, 5 ebenfalls beide Fahrstrecken 2, 2a vollkommen unabhängig voneinander durchfahren.

Völlig unabhängig und ohne Fahrverbindung zu der Stadt 1 könnte auch eine Stadt 2 vorhanden sein, die eine weitere Fahrstrecke 2b definiert, auf der ein oder mehrere Werkstückträger autonom verfahrbar sind. Auch dieser Stadt 2 können unterschiedlich und beliebig viele Level 1, 2, 3 zugeordnet sein.

Hieraus wird die modulare Erweiterbarkeit des erfindungsgemäßen Fahrstreckensystems erkennbar.

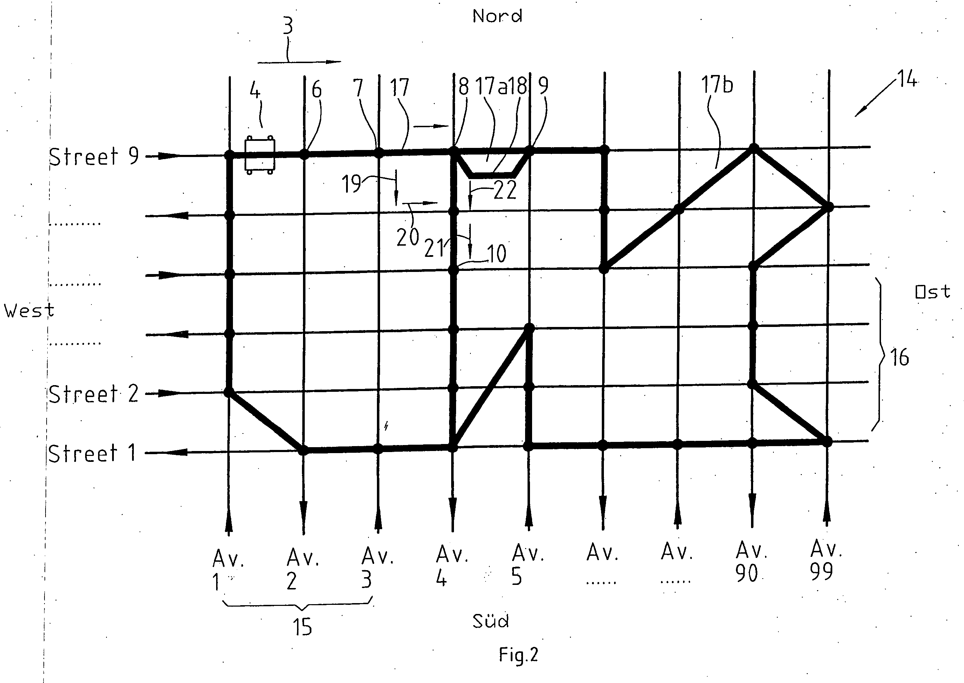

In Figur 2 ist nun erkennbar, dass einer beliebigen Fahrstrecke 2 nun ein Straßensystem nach dem Manhattan-Straßensystem von New York übergestülpt wird.

Hierbei ist erkennbar, dass Avenues 1-99 von Süden nach Norden verlaufen und hierbei jeweils nur ungeradzahlige Avenues von Süden nach Norden und geradzahlige Avenues von Norden nach Süden befahrbar sind. Sie sind also stets als Einbahnstraßen ausgebildet.

Möglichst senkrecht kreuzend sind zu den Avenues Straßen 1-99 vorgesehen, wobei im Ausführungsbeispiel nur die Straßen 1 bis 9 gezeichnet sind. Diese Straßen verlaufen von West nach Ost, d. h. also in horizontaler Richtung, und geradzahlige Straßen sind nur von West nach Ost befahrbar, während ungeradzahlige Straßen von Ost nach West befahrbar sind und deshalb ebenfalls als Einbahnstraßen ausgebildet sind.

Wichtig ist, dass im Bereich jeder Bearbeitungsstation 6-10 und auch gegebenenfalls jeder Weiche ein Knotenpunkt einer Straße mit einer Avenue vorhanden ist, um so eine eindeutige Wegkoordinate zu bilden.

Das sogenannte Straßensystem 14 wird also als rechtwinkliges Koordinatensystem über die Fahrstrecke 2 gelegt und es werden auch den zugeordneten Weichen und Business-Straßen 18 entsprechende Wegekoordinaten zugeordnet.

Die Verkehrsregeln sind nun wie folgt:
Ein Werkstückträger 4 soll in Pfeilrichtung 3 die Hauptstraße befahren und setzt sich hierbei vor eine Bearbeitungsstation 6.

Er prüft zunächst über eine frontseitig angeordnete Distanzmessung, ob die Bearbeitungsstation 6 frei ist. Ist sie frei, dann fährt er in die Bearbeitungsstation 6 ein und das auf ihm lagernde Werkstück wird dort entsprechend bearbeitet.

Nach der entsprechenden Bearbeitungszeit gibt die Bearbeitungsstation 6 den Werkstückträger 4 frei, der in Pfeilrichtung 3 zur weiteren Bearbeitungsstation 7 fährt und das darauf liegende Werkstück eine Bearbeitung erfährt.

Nun soll als nächste Station eine von der Hauptfahrstrecke 2 abweichende Bearbeitungsstation 10 angefahren werden und es greifen nun die entsprechenden Verkehrsregeln.

Die Fahrt auf der 3. Avenue in Pfeilrichtung 19 ist verboten, weil die 3. Avenue nur von Süd nach Nord befahren werden kann. Ebenso ist die Fahrt auf der 8. Straße in Pfeilrichtung 20 verboten, weil diese nur von Ost nach West befahren werden darf, nicht jedoch von West nach Ost, was das Ziel des Werkstückträgers 4 wäre.

Aus diesem Grunde fährt der WS-Träger 4 in Pfeilrichtung weiter von der Bearbeitungsstation 7 zur Bearbeitungsstation 8 und biegt dort in Pfeilrichtung 22 nach unten ab, wo er in Pfeilrichtung 21 dann über die nächste Straßenkreuzung die Bearbeitungsstation 10 erreicht.

Die Ausführung nach Figur 2 fällt auf die Bedeutung sogenannter Business-Straßen 18.

Sollte sich herausstellen, dass auf der Verbindungsstrecke zwischen den Bearbeitungsstationen 8 und 9 ein zu hoher Verkehr von Werkstückträgern ist, kann der nächste, nachfolgende Werkstückträger an der Bearbeitungsstation 8 auf die Business-Straße 18 ausweichen und erreicht so über den Umweg (Bypass) die darauffolgende Bearbeitungsstation 9.

Dies erfolgt alles im Block 17a, der auf den davor liegenden Block 16 folgt.

Somit ist klar, dass die Einteilung in Avenues 15 und Streets 16 zur einem rechtwinkligen Koordinatensystem führt, in dem bestimmte Verkehrsregeln eingehalten werden, die deshalb nicht mehr eigens programmiert werden müssen. Damit wird der Programmieraufwand wesentlich herabgesetzt.

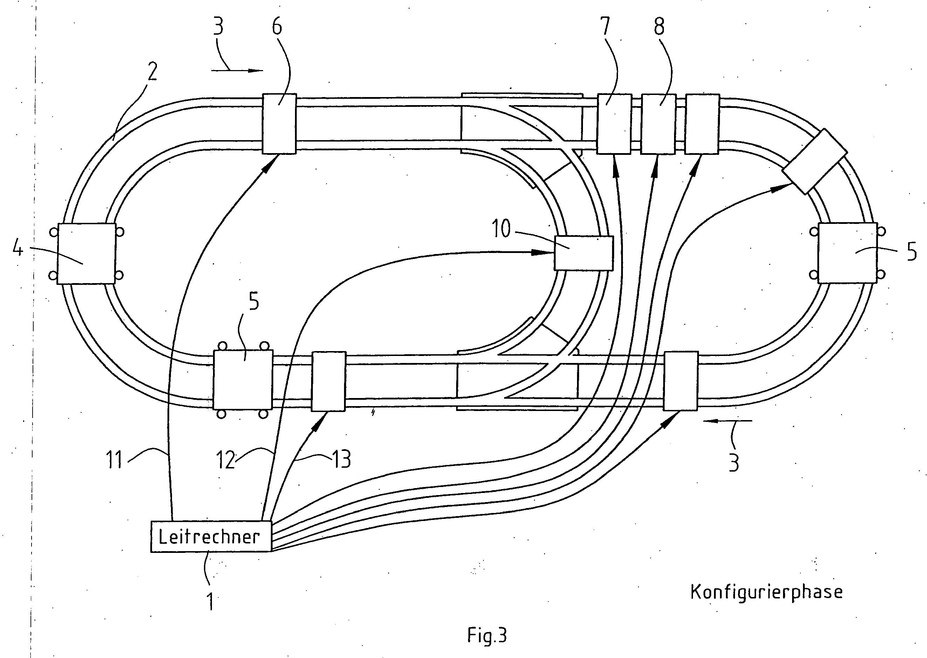

Die Figur 3 zeigt die sogenannte Konfigurierphase der Bearbeitungsstationen 6-10.

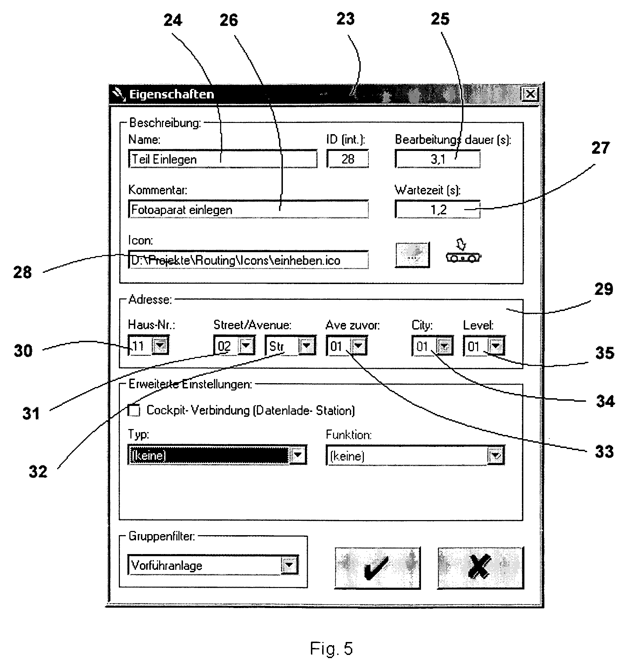

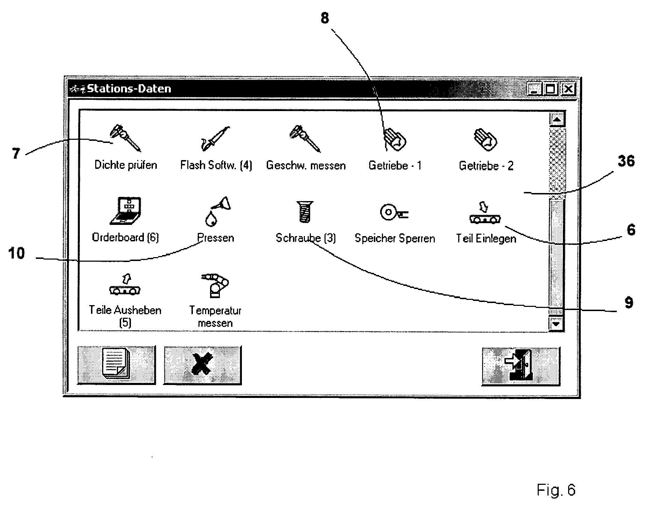

In dieser Konfigurierphase werden den Bearbeitungsstationen eigene Steuerungsprogramme einprogrammiert, die später anhand der Figuren 5 bis 7 noch näher erläutert werden.

Jede Bearbeitungsstation erhält also die Zuordnung einer Koordinate im Straßensystem und es kann gegebenenfalls auch noch die Art der Bearbeitung mit einprogrammiert werden.

Zu diesem Zweck kann eine drahtgebundene oder drahtlose Datenverbindung 11, 12, 13 jeweils mit dem Leitrechner 1 hergestellt werden, wobei diese Datenverbindung jedoch nur in unidirektionaler Richtung und vorhanden sein muss und nur temporär vorhanden ist, um eben den Bearbeitungsstationen 6-10 die entsprechenden Koordinaten einzuprogrammieren.

Eine drahtlose Programmierung würde beispielsweise über eine Infrarotschnittstelle erfolgen oder über andere Übertragungsmittel.

Wichtig ist, dass nur einmalig und kurzzeitig diese Einprogrammierung der Koordinaten der Bearbeitungsstationen 6-10 erfolgt und bei vorhandenem Fahrsystem eine erneute Programmierung nicht notwendig ist.

Hieraus ergibt sich der geringe Programmierungsaufwand, weil eine solche Programmierung nur einmalig überhaupt stattfinden muss.

Es wird hierbei angenommen, dass den Werkstückträgern 4,5 noch kein Steuerungsprogramm einprogrammiert ist. Sie haben allerdings schon das allgemeine Steuerungsprogramm, welches das Streckensystem und die Verkehrsregeln beinhaltet. Aus diesem Grunde ist auch hier der Programmieraufwand gering, weil dieses Streckensystem einmalig nur eingespeist werden muss und dann stets gleich bleibt. Es ist deshalb ohne Weiteres modular erweiterbar, weil das Steckensystem nach dem Manhattan-Straßensystem beliebig erweiterbar ist, indem einfach neue Avenue-Nummern oder neue Straßennummern hinzukommen.

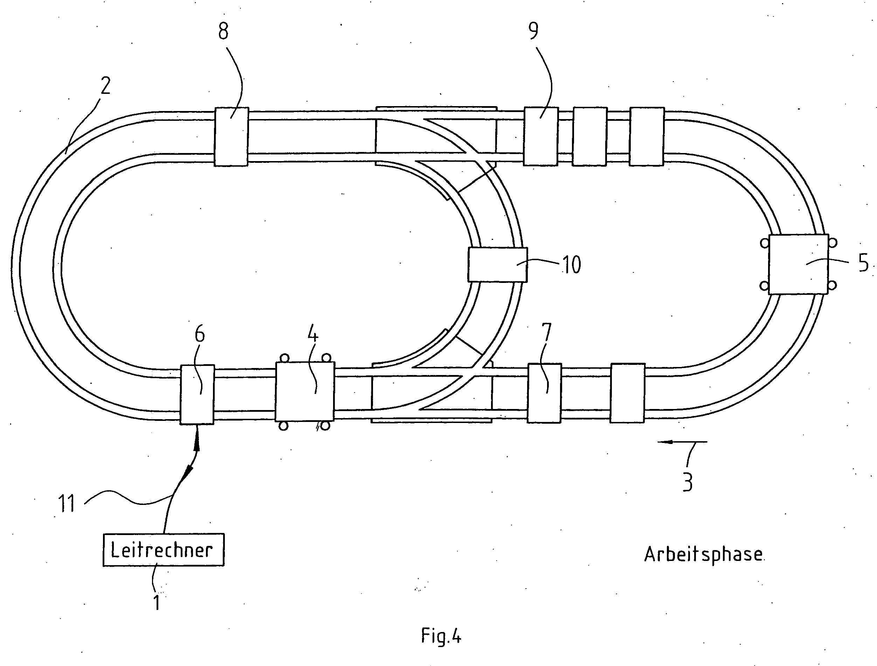

Die Figur 4 zeigt nun den wesentlichen Vorteil der Erfindung, dass es nun mehr ausreicht, den einzelnen Werkstückträgern ihr Steuerungsprogramm einzuspeisen. Zu diesem Zweck dient eine einzige Bearbeitungsstation 6, die über eine Datenverbindung 11 mit dem Leitrechner in Verbindung steht.

Der jeweils zu programmierende Werkstückträger 4, 5 fährt nun in Pfeilrichtung 3 zu der Bearbeitungsstation 6 und übernimmt beispielsweise über eine drahtlose Datenschnittstelle sein Steuerungsprogramm, welches ihm nun befiehlt, in welcher zeitlichen Reihenfolge und in welcher Art er die einzelnen Bearbeitungsstationen 6-10 anzufahren hat.

Gleiches geschieht mit dem dahinter liegenden Werkstückträger 5, der ebenfalls an der einzigen Bearbeitungsstation 6 sein Steuerungsprogramm aufnimmt.

Hierauf ist die Erfindung jedoch nicht beschränkt. Es kann in einer anderen Ausgestaltung auch vorgesehen werden, dass mehrere Bearbeitungsstationen zur Programmierung der einzelnen Werkstückträger 4, 5 vorgesehen werden.

Ebenso kann es in einer dritten Ausführungsform vorgesehen werden, dass nicht die Programmierung über Bearbeitungsstationen erfolgt, sondern drahtlos beispielsweise über einen Funkbefehlt von dem Leitrechner auf die einzelnen Werkstückträger 4, 5.

Nach erfolgter Einprogrammierung des Steuerungsprogramms gemäß Figur 4 beginnt die Arbeitsphase. Die Werkstückträger fahren nun in dem Straßensystem nach Figur 2 und fahren dort die einzelnen Bearbeitungsstationen an, wie es vorstehend bereits schon beschrieben wurde.

Nachfolgend wird nun der geringe Programmieraufwand bei der Programmierung der Steuerung beschrieben.

Die Figur 5 zeigt, wie in einem Programmierfenster 23 die einzelnen spezifischen Daten der jeweiligen Bearbeitungsstation zugeordnet werden können.

In dem Fenster 24 wird der Name der Bearbeitungsstation eingegeben und in dem Fenster 25 wird die Bearbeitungsdauer eingegeben.

Im Fenster 26 kann ein Kommentar eingegeben werden, welche Traglast der Bearbeitungsstation zugeordnet werden kann.

Im Fenster 27 kann beispielsweise eine Wartezeit eingegeben werden, die dem davor liegenden Werkstückträger 4 sagt, wie lange er vor dieser Bearbeitungsstation warten soll. Wird diese Wartezeit überschritten, versucht er selbsttätig eine gleiche Bearbeitungsstation an einem anderen Ort des Straßensystems anzufahren.

Im Fenster 28 wird ein Symbol für die Bearbeitungsstation für den späten Pool ausgewählt und in dem Adressenfeld 29 wird der jeweiligen Bearbeitungsstation die genaue Straßenadresse zugeordnet.

Im Fenster 30 wird hierbei die Hausnummer eingegeben, im Fenster 31 die Straßen- oder Avenue-Nummer, im Fenster 32 die Straßenart (Straße oder Avenue).

Im Fenster 33 wird die Vorläufer-Straße oder Avenue angegeben, die vor dieser Kreuzung liegt und im Fenster 34 wird die Nummer der Stadt sowie im Fenster 35 die Ebene der Fahrstrecke 2 eingegeben.

Damit ist mit diesem Programmierfenster eine eindeutige Zuordnung der jeweiligen Bearbeitungsstation im Straßensystem 14 gegeben.

Nachdem den einzelnen Bearbeitungsstationen im Programmierfenster 23 die Funktion und die Adresse zugeordnet wurde, werden alle Bearbeitungsstationen in einem Bearbeitungs-Stationenpool 36 einer Benutzeroberfläche mit ihrem entsprechenden Symbol abgelegt.

Die Bearbeitungsstation 6 soll beispielsweise das zu bearbeitende Teil einheben, während die Bearbeitungsstation 7 auf das zu bearbeitende Werkstück eine Dichtmasse aufbringen soll. Die Bearbeitungsstation 8 soll ein Getriebe einbauen, die Bearbeitungsstation 9 soll Schraubenverbindungen anbringen, die Bearbeitungsstation 10 soll Klebeverbindungen anbringen usw.

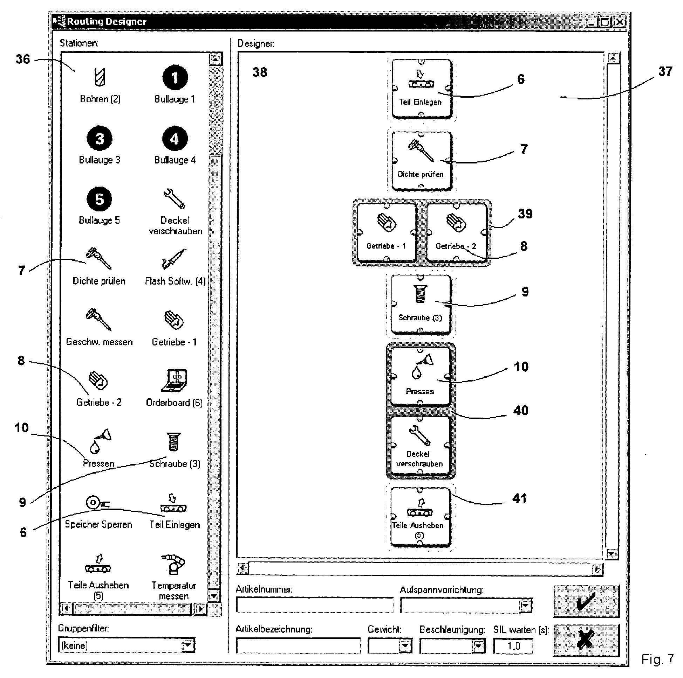

Ein Benutzer dieses Fahrsystems muss nun keinen Programmieraufwand mehr ausführen, denn es genügt gemäß Figur 7 aus dem Bearbeitungs-Stationen-Pool 36 die einzelnen Symbole der Bearbeitungsstationen 6-10 auf eine Benutzeroberfläche 37 zu ziehen und diese dann zeitlich hintereinanderfolgend von oben nach unten in der Reihenfolge 38 anzuordnen.

Damit ist die gesamte Bearbeitung eines Werkstückes auf dem erfindungsgemäßen Transferstraßensystem vollständig beschrieben und eindeutig ausführbar.

Im Ausführungsbeispiel ist somit angegeben, dass als erstes in der Bearbeitungsstation 6 das Teile einheben erfolgen soll und in der darauffolgenden Bearbeitungsstation 7 die Dichtmasse aufgebracht werden soll.

Die Nebeneinander-Anordnung von Bearbeitungsstationen ist eine Mehrfach-Anordnung 39 und bedeutet, dass die Getriebestationen 8 mehrfach vorhanden sind. Wenn also eine Getriebestation belegt ist, bedeutet diese Anordnung, dass der Werkstückträger an eine gleichartige andere Getriebestation irgendwo anders im Straßennetz fahren kann, um dort die Getriebebearbeitungsmanipulation auszuführen.

Den einzelnen Bearbeitungsstationen sind auch noch Rahmenfarben zugeordnet, wobei z. B. eine erste Rahmenfarbe 41 bedeutet, dass diese Stationen in zeitlich streng hintereinander folgender Reihenfolge abgearbeitet werden müssen, während eine andere Rahmenfarbe 40 beispielsweise bedeutet, dass diese Stationen zeitlich vertauscht angefahren werden können. Es ist demzufolge gleichgültig, ob zuerst die erste oder die zweite Station angefahren wird.

Auf diese Weise wird durch Anordnung der Symbole der Bearbeitungsstationen auf der Benutzeroberfläche 37 eine eindeutige Zuordnung von auszuführenden Arbeiten von verschiedenen Bearbeitungsstationen vorgegeben.

Ein Programmieraufwand ist damit nicht mehr erforderlich.

Hieraus ergibt sich, dass das gesamte System ohne Weiteres modular erweiterbar ist, wodurch ein geringer Programmieraufwand durch Neuzuordnung von Koordinaten einer neu hinzugekommenen Bearbeitungsstation entsteht. Ein weiterer Aufwand entsteht nicht. Es genügt dann, die neu hinzugekommene Bearbeitungsstation in dem Bearbeitungspool 36 aufzunehmen und in dem Fenster nach Figur 5 dieser neu hinzugekommenen Bearbeitungsstation die erforderlichen Daten und Funktionen zuzuordnen.

Ein Benutzer, der das erfindungsgemäße Transfersystem nun verwenden will, benötigt maximal einen Programmieraufwand von 5 Minuten, weil es ausreicht, die einzelnen Symbole der Bearbeitungsstationen in der in Figur 7 gezeichneten Weise auf die Benutzeroberfläche 37 zu ziehen. Weiterer Programmieraufwand ist nicht erforderlich.

Aber auch für den Systemunterhalter, der das Transferstraßensystem unterhält und gegebenenfalls neu programmieren muss, ist nur ein geringer Programmieraufwand erforderlich, der im Bereich von 10 Minuten liegt, denn es genügt, jeweils über die Konfigurationsphase der hinzugekommenen Bearbeitungsstation die dieser Bearbeitungsstation zukommenden Koordinaten einzuprogrammieren und später dann in dem Programmierfenster nach Figur 5 dieser neu hinzugekommenen Bearbeitungsstation die entsprechenden Parameter zuzuordnen.

Der Programmieraufwand im Hinblick auf bekannte Transferstraßenanlagen ist also um das Hundertfache reduziert.

Das Frontend (Gestaltung der Benutzeroberfläche) ist beispielsweise in der Programmiersprache visual basic ausgeführt, während die dahinterliegende Datenbank eine SQL-Datenbank ist.

Das Steuerungsprogramm für die Werkstückträger und die Bearbeitungsstationen ist bevorzugt in der Programmiersprache C-programmiert.

Wird die Benutzeroberfläche abgeschaltet (am frontend), dann bleiben die Daten im backend-System erhalten, was bedeutet, dass das System stets seine Daten gespeichert erhält und somit die Steuerungsparameter unzerstörbar in dem System vorhanden bleiben.

Die Neuprogrammierung von Werkstückträgern mit Einspeicherung eines neuen Bearbeitungsprogramms erfolgt innerhalb von 1/10 Sekunde, weil nur eine kurz dauernde Datenverbindung mit dem Leitrechner vorhanden sein muss.

Selbstverständlich kann es in einer Weiterbildung der Erfindung vorgesehen werden, dass zwischen einer einzigen Bearbeitungsstation und einem Leitrechner eine ständige Datenverbindung vorhanden ist. Diese ständige Datenverbindung wird für Qualitätsrückmeldungen benötigt. Auf dieser Datenverbindung melden beispielsweise die dort hindurchfahrenden Werkstückträger Ihre gesammelten Daten, die beispielsweise darin bestehen, in welcher Qualität und in welcher Geschwindigkeit die dort lagernden Werkstücke bearbeitet wurden, ob Fehler auftraten und ob irgendwelche Reparaturen notwendig waren.

Damit werden also Sicherungs- und Qualitätsdaten in einem ständigen Datenaustausch zum Leitrechner übertragen.

### Zeichnungslegende

- 1: Leitrechner
- 2: Fahrstrecke 2a 2b
- 3: Pfeilrichtung
- 4: WS-Träger
- 5: WS-Träger
- 6: Bearbeitungsstation
- 7: Bearbeitungsstation
- 8: Bearbeitungsstation
- 9: Bearbeitungsstation
- 10: Bearbeitungsstation
- 11: Datenverbindung
- 12: Datenverbindung
- 13: Datenverbindung
- 14: Straßensystem
- 15: Avenues
- 16: Streets
- 17: Block 17a
- 18: Business-Straße
- 19: Pfeilrichtung
- 20: Pfeilrichtung
- 21: Pfeilrichtung
- 22: Pfeilrichtung
- 23: Programmierfenster
- 24: Name Bearbeitungsstation
- 25: Bearbeitungsdauer
- 26: Kommentarfenster
- 27: Fenster (Wartezeit)
- 28: Fenster (Symbol)
- 29: Adressenfeld
- 30: Fenster (Haus-Nr.)
- 31: Fenster (Str./Avenue-Nr.)
- 32: Fenster (Straßenart)
- 33: Fenster (Verläufer-Straße)
- 34: Fenster (Stadt)
- 35: Fenster (Ebene)
- 36: Bearbeitungs-Stationen-Pool
- 37: Benutzeroberfläche
- 38: Reihenfolge (zeitlich)
- 39: Mehrfach-Anordnung
- 40: Rahmenfarbe (gleichgültige Bearbeitung)
- 41: Rahmenfarbe (sequentielle Bearbeitung)

## Patentansprüche

1. Verfahren zum Betrieb eines Werkstück-Transfersystems, wobei das Transfersystem ein bahngeführtes System mit mindestens einem Werkstückträger (4, 5) ist, welcher entlang einer Fahrstrecke (2, 2a, 2b) zu mindestens einer Bearbeitungsstation (6, 7, 8, 9, 10) fährt, wobei der Werkstückträger (4, 5) mehrere angeordnete Entfernungssensoren, sowie eine Intelligenz aufweist, welche mittels Datenverbindung (11, 12, 13) konfigurierbar ausgebildet ist, **dadurch gekennzeichnet, dass** das Transfersystem mittels einer Steuerungssoftware konfigurierbar ist, wobei die Konfigurierung auf ein virtuelles, über die Bearbeitungsstationen (6, 7, 8, 9, 10) gelegtes Rastersystem aufgebaut ist, das den Verkehrsregeln eines Straßensystems einer Großstadt entspricht, wobei das Verfahren nachfolgende Verfahrensschritte aufweist:
• Definition der Parameter jeder einzelnen Bearbeitungsstation (6, 7, 8, 9, 10) und gegebenenfalls jeder Weiche, sofern vorhanden,
• Definition der Lage-Punkte der Bearbeitungsstation (6, 7, 8, 9, 10) nach Ziffer 1 über ein Straßensystem (14) durch Legen eines virtuellen Rastersystems einer Straßenkarte über die Bearbeitungsstationen (6, 7, 8, 9, 10) und Weichen,
• Definition des Straßensystems (14) so, dass bestimmte Straßenverkehrsregeln einzuhalten sind,
• Konfigurierung der einzelnen Bearbeitungsstationen (6, 7, 8, 9, 10) und Weichen einmalig durch Herstellen einer Datenverbindung (11, 12, 13) mit einem Leitrechner (1), so dass die einzelnen Straßenkreuzungen, Blocks (17, 17a) und Businessstraßen (18) festgelegt werden,
• Entfernen der Datenverbindung (11, 12, 13) zu den einzelnen Bearbeitungsstationen (6, 7, 8, 9, 10) und Herstellen einer Datenverbindung zu mindestens jeweils einem Werkstückträger (4, 5),
• Einspeisen des Bearbeitungsprogramms auf dem Werkstückträger (4, 5),
• Start des Werkstückbearbeitungssystems mit Zuführung der einzelnen Werkstückträger (4, 5) an die Bearbeitungsstationen (6, 7, 8, 9, 10), ohne Datenverbindung zwischen der Bearbeitungsstation (6, 7, 8, 9, 10) und dem Leitrechner (1) mit Ausnahme gegebenenfalls einer einzigen als Rückmeldestation,
• Übergabe von Bearbeitungsdaten von einem Werkstückträger (4, 5) an einen Leitrechner (1) zu Kontrollzwecken.

2. Verfahren nach Anspruch 1, **dadurch gekennzeichnet, dass** das virtuelle Rastersystem gleich einem kartesischen Koordinatensystem (Abszisse, Ordinate, Kote) gebildet ist und bestimmte Regeln aufweist, welche bei der Programmierung des Transfersystems nicht mehr eigens beachtet werden müssen.

3. Verfahren nach den Ansprüchen 1 oder 2, **dadurch gekennzeichnet, dass** die Programmierung des Transfersystems nachfolgende, wesentliche Schritte aufweist:
• das der Werkstückträger (4, 5) eine autonome Intelligenz aufweist
• das das verwendete Straßen- und Blocksystem (14) (nachgebildet nach dem Straßensystem von Manhattan) feste Verkehrsregeln definiert, welche das Verhalten der Werkstückträger (4, 5) vor und nach der Bearbeitungsstation (6, 7, 8, 9, 10) regelt
• eine Zeitersparnis und eine wesentliche Einsparung von Programmieraufwand durch Ziehen und Fallenlassen von Symbolen, die jeweils einer Bearbeitungsstation (6, 7, 8, 9, 10) zugeordnet sind auf eine Benutzeroberfläche (37), wodurch der zeitliche Ablauf der Konfiguration der einzelnen vom Benutzer zu konfigurierenden Bearbeitungsstationen (6, 7, 8, 9, 10) wesentlich vermindert wird.

4. Verfahren nach den Ansprüchen 1 bis 3, **dadurch gekennzeichnet, dass** das über der Fahrstrecke liegende Koordinatensystem nachfolgende erste Regel zum Aufbau eines Koordinatengitters (Layout) aufweist:
• waagerechte Linien sind als "Streets" (16) bezeichnet, beginnen bei 1 und steigen um 1 nach oben, wobei die 1. Street (16) links unten beginnt und nach links verläuft,
• Senkrechte Linien sind als "Avenues" (15) bezeichnet, beginnen bei 1 und steigen um 1 nach rechts,
• die Nummern der Streets (16) steigen auf ungeraden Avenues (15) an, die Nummern der Avenues (15) steigen auf einer geraden Street (16) an,
• ein Rechteck, welches sich zwischen zwei Streets (16) und zwei Avenues (15) gebildet ist, wird als "Block" (17, 17a) bezeichnet,
• eine Ausschleusung innerhalb eines Blockes (17, 17a) führt wieder in die Street (16) zurück und wird als "Business Street" (18) bezeichnet.

5. Verfahren nach den Ansprüchen 1 bis 4, **dadurch gekennzeichnet, dass** das über die Fahrstrecke (2, 2a, 2b) gelegte Koordinatensystem nachfolgende zweite Regel zur Generierung einer Haus-Nummer aufweist:
• Direkt auf einer Avenues (15) oder Streets (16) können pro Block (17, 17a) nur die Nummern 01 - 09 sein. Die Nummern steigen in Fahrtrichtung.
• Auf Business-Streets (18), die links von einer Ave/Str (15, 16) liegen, sind alle Haus-Nr. ungerade (Zehnerstelle 11-19, 31-39, ...)
• Auf Business-Streets (18), die rechts von einer Ave/Str (15, 16) liegen, sind alle Haus-Nr. gerade (Zehnerstelle 21-29, 41-49, ...),
wobei es für die Generierung einer Hausnummer nicht wichtig ist, von wo aus links oder rechts ist, sondern lediglich, dass in einem Block (17, 17a) auf der einen Seite die geraden Hausnummern und auf der anderen Seite die ungeraden Hausnummern gebildet sind.

6. Verfahren nach den Ansprüchen 1 bis 5, **dadurch gekennzeichnet, dass** das über die Fahrstrecke (2, 2a, 2b) gelegte Koordinatensystem nachfolgende dritte Regel für die gültigen Bereiche der einzelnen Elemente aufweist:
• City: 1-15 Kennung eines Systems
• Level: 1-15 je City Stockwerk eines Systems
• Über (Kreuzung): 1-99 je City über welche Str/Ave (15, 16) die Station erreicht wird
• Haus-Nr.: 1-99 je Block Hausnummer der Bearbeitungsstation (17, 17a) (6, 7, 8, 9, 10)
• Streets (16): 1-99 je City )
• Avenues (15): 1-99 je City ) - auf welcher Str/Ave/B-Str. (16, 15, 18) die Station liegt
• Business-Str. (18): 1-9 je Block )
• Operation: S,G,M,F Sequentiell, Gleichgültig, Mehrfach, Fix
• BA-Code: 1-255 Bearbeitungs-Code für die Maschine
• Index: 1-15 je Operation Für das Kombinieren von G- und M-Operation

7. Verfahren nach den Ansprüchen 1 bis 6, **dadurch gekennzeichnet, dass** das über die Fahrstrecke (2, 2a, 2b) gelegte Koordinatensystem nachfolgende vierte Regel zum Aufbau einer Adresse einer Station aufweist:
• Str/Ave-Nr.: auf welcher Ave (15) oder Str (16) sich die Station befindet
• City/Level: in welcher City/Level sich die Station befindet
• Haus-Nr.: die Hausnummer der Station
• Cross bevor: ist die Str (16) oder Ave (15) der Kreuzung zuvor
• Str/Ave-Typ: auf welcher Ave (15) oder Str (16) sich die Station befindet.

8. Verfahren nach den Ansprüchen 1 bis 7, **dadurch gekennzeichnet, dass** das über die Fahrstrecke (2, 2a, 2b) gelegte Koordinatensystem nachfolgende fünfte Regel zum Aufbau einer Adresse einer Weiche aufweist:
• Str/Ave/B-Str-Nr.: welche Ave/Str (15, 16) oder Business-Str. (18) gerade nach der Weiche kommt
• City/Level: welche City/Level nach der geraden Weiche kommt
• Str/Ave/B-Str-Nr.: welche Ave/Str (15, 16) oder Business-Str (18) beim Abbiegen nach der Weiche kommt
• City/Level: welche City/Level nach dem Abbiegen der Weiche kommt
• Str/Ave/B-Str-Typ: ob eine Ave/Str (15, 16) oder Business-Str. (18) beim gerade/Abbiegen nach der Weiche kommt,
wobei beim Abbiegen auf eine Business-Str. (18) im "abbiege City/Level Teil" die Kreuzung zuvor steht.

9. Verfahren nach den Ansprüchen 1 bis 8, **dadurch gekennzeichnet, dass** das über die Fahrstrecke (2, 2a, 2b) gelegte Koordinatensystem nachfolgende sechste Regel zum Aufbau einer Adresse einer Einmündung aufweist:
• Str/Ave/B-Str-Nr.: welche Ave/Str (15, 16) oder Business-Str. (18) nach der Einmündung kommt
• City/Level: welche City nach der Einmündung kommt
• Str/Ave/B-Str-Typ: ob eine Ave/Str (15, 16) oder Business-Str. (18) nach der Einmündung kommt

10. Verfahren nach den Ansprüchen 1 bis 9, **dadurch gekennzeichnet, dass** das über die Fahrstrecke (2, 2a, 2b) gelegte Koordinatensystem nachfolgende festgelegte und zu befolgende Verkehrsregeln aufweist, welche einen verringerten Programmieraufwand für das Transfersystem ausbilden:
• Das Transfersystem soll nur im Uhrzeigersinn befahren werden.
• Geradzahlige Avenues (15) verlaufen von Norden nach Süden als Einbahnstraßen und ungeradzahlige Avenues (15) verlaufen von Süden nach Norden ebenfalls als Einbahnstraßen.
• Die senkrecht zu den Avenues (15) verlaufenden Streets (16) kreuzen sich mit den Avenues (15) und bilden dort Blocks (17, 17a).
• Geradzahlige Streets (16) verlaufen von Westen nach Osten und ungeradzahlige Streets (16) verlaufen von Osten nach Westen und sind jeweils als Einbahnstraßen ausgebildet.
• Zwischen den Blocks gibt es Business-Straßen (18), welche im Block (17, 17a) zwei Bearbeitungsstationen überbrücken können und bilden somit Bypässe zu den Hauptfahrstraßen, welche lediglich im Uhrzeigersinn (in Richtung der Hauptfahrstraßen) durchfahren werden können.

11. Verfahren nach den Ansprüchen 1 bis 10, **dadurch gekennzeichnet, dass** zur Programmierung einer Fahrstrecke (2, 2a, 2b) lediglich eine Koordinate einer Bearbeitungsstation (6, 7, 8, 9, 10) und/oder Weiche verwendet wird, welche die Form einer Straßenadresse (Kreuzung 9.Straße, 5.Avenue) aufweist und aufgrund der integrierten Intelligenz der Werkstückträger (4, 5) diese zu den Bearbeitungsstationen (6, 7, 8, 9, 10) führt.

12. Verfahren nach den Ansprüchen 1 bis 11, **dadurch gekennzeichnet, dass** die mehrfach angeordneten Entfernungssensoren an den Werkstückträgern (4, 5) eine Distanzmessung von dem jeweils hinten fahrenden Werkstückträger (4, 5) auf den vorausfahrenden Werkstückträger (4, 5) ausführen und eine Kommunikation zwischen den Werkstückträgern (4, 5) ausbilden, welche das Auffahren auf einen vorausfahrenden Werkstückträger (4, 5) verhindert beziehungsweise den nachfahrenden Werkstückträger (4, 5) aufgrund des eingespeicherten Straßensystems umleitet.

13. Verfahren nach den Ansprüchen 1 bis 12, **dadurch gekennzeichnet, dass** in der Konfigurierungsphase mittels temporärer Datenverbindung (11, 12, 13) zwischen einem Leitrechner (1) und den Bearbeitungsstationen (6, 7, 8, 9, 10) ihre Lage im Straßensystem und Ihre Bearbeitungsaufgabe mitgeteilt und einprogrammiert wird, wodurch eine eindeutige Straßenadresse festgelegt ist.

14. Verfahren nach den Ansprüchen 1 bis 13, **dadurch gekennzeichnet, dass** die Hinzunahme weiterer Bearbeitungsstationen (6, 7, 8, 9, 10) lediglich mittels Festlegung und Konfigurierung einer Straßenadresse ausgebildet ist.

15. Verfahren nach den Ansprüchen 1 bis 14, **dadurch gekennzeichnet, dass** das Verfahren neben der Konfigurierung eines einzelnen Fahrstraßensystems auch die Konfigurierung weiterer, autonomer Fahrstraßensysteme ausbildet, oder diese mittels Fahrverbindungen miteinander endlos verbindet, wodurch auch verschiedene Transfersystem-Ebenen (Level) ausgebildet sind.

16. Verfahren nach den Ansprüchen 1 bis 15, **dadurch gekennzeichnet, dass** jeder einzelnen Bearbeitungsstation (6, 7, 8, 9, 10) lediglich eine einzelne Bearbeitungsprozedur zugeordnet ist und mittels ziehen der jeweiligen Bearbeitungsstation (6, 7, 8, 9, 10) auf eine Benutzeroberfläche (37) die Ausführung des Fahrstraßensystems lediglich mittels Aneinanderreihen der Bearbeitungsstationen (6, 7, 8, 9, 10) ausgebildet ist, wodurch die zeitliche Reihenfolge (38) der Bearbeitung definiert ist.

17. Verfahren nach den Ansprüchen 1 bis 16, **dadurch gekennzeichnet, dass** das Fahrstraßensystem eine Mehrfach-Anordnung (39) von Bearbeitungsstationen (6, 7, 8, 9, 10) aufweist, wodurch gleichartige Bearbeitungsprozeduren für mehrere Werkstückträger (4, 5) zeitgleich zur Verfügung stehen.

18. Verfahren nach den Ansprüchen 1 bis 17, **dadurch gekennzeichnet, dass** die zeitliche Reihenfolge (38) der Bearbeitungsprozeduren eines Werkstückträgers (4, 5) den Bearbeitungsstationen (6, 7, 8, 9, 10) frei zuordnungsbar ist.

19. Verfahren nach den Ansprüchen 1 bis 18, **dadurch gekennzeichnet, dass** das Transfersystem Reparaturstationen aufweist, welche eine Reparatur eines nicht norm- oder wunschgerecht bearbeiteten Werkstücks auf einem Werkstückträger (4, 5) ausbildet und diesen nach erfolgter Reparatur dem Fahrstraßensystem wieder zuführt.

20. Verfahren nach den Ansprüchen 1 bis 19, **dadurch gekennzeichnet, dass** den jeder einzelnen Bearbeitungsstation (6, 7, 8, 9, 10) mit ihrer einprogrammierten Bearbeitungsaufgabe und Ortslage im Fahrstraßensystem ein Symbol zugeordnet ist, welches mittels ziehen auf einer Benutzeroberfläche die gewünschte zeitliche Reihenfolge (38) anzuordnen.

21. Verfahren nach den Ansprüchen 1 bis 20, **dadurch gekennzeichnet, dass** nach Anordnung der Symbole auf der Benutzeroberfläche mittels Auslösen eines Startsignals der Werkstückträger (4, 5) an eine erste Bearbeitungsstation (6, 7, 8, 9, 10) fährt und dort die Daten des Steuerprogramms lediglich einmal für die gesamte Betriebsdauer des Transfersystems aufnimmt, welche den gesamten Arbeitsauftrag des Werkstückträgers (4, 5) bei gleichbleibenden Werkstücken und Bearbeitungsprozeduren bilden.

22. Verfahren nach den Ansprüchen 1 bis 21, **dadurch gekennzeichnet, dass** das Verfahren eine Plausibilitätsprüfung des Werkstückträgers (4, 5) für die nachfolgende Bearbeitungsstation (6, 7, 8, 9, 10) ausbildet, wobei das Fahren lediglich in vorgegebener Fahrtrichtung, das bevorzugte Nicht-Befahren von Business-Streets (18) oder das unerlaubte Fahren entgegen von Einbahnstraßen gewährleistet ist.

23. Verfahren nach den Ansprüchen 1 bis 22, **dadurch gekennzeichnet, dass** der Werkstückträger (4, 5) nach Überschreiten einer vorgegebenen Wartezeit vor einer besetzten Bearbeitungsstation (6, 7, 8, 9, 10) autonom die nächste, freie und gleichartige Bearbeitungsstation (6, 7, 8, 9, 10) im vorgegebenen Transfersystem anfährt.

## Claims

1. Method for operating a workpiece transfer system, wherein the transfer system is a track-based system with at least one workpiece carrier (4, 5) which travels along a route (2, 2a, 2b) to at least one working station (6, 7, 8, 9, 10), wherein the workpiece carrier (4, 5) exhibits a plurality of arranged distance sensors and an intelligence which is embodied so that it can be configured by means of data connection (11, 12, 13), **characterised in that** the transfer system can be configured by means of a control software, wherein the configuration is based on a virtual grid system which is laid over the working stations (6, 7, 8, 9, 10) and which conforms to the traffic rules of a road system of a large city, wherein the method exhibits the following method steps:
. definition of the parameters of every individual working station (6, 7, 8, 9, 10) and optionally every switch, where present,
. definition of the location points of the working station (6, 7, 8, 9, 10) after number 1 by means of a road system (14) by laying a virtual grid system of a road map over the working stations (6, 7, 8, 9, 10) and switches,
. definition of the road system (14) so that certain road traffic rules have to be obeyed,
. configuration of the individual working stations (6, 7, 8, 9, 10) and switches once by producing a data connection (11, 12, 13) with a master computer (1) so that the individual road crossings, blocks (17, 17a) and business streets (18) are fixed,
. removal of the data connection (11, 12, 13) to the individual working stations (6, 7, 8, 9, 10) and production of a data connection to at least one workpiece carrier (4, 5) in each case,
. feeding of the working programme to the workpiece carrier (4, 5),
. starting of the workpiece working system with the guiding of the individual workpiece carriers (4, 5) to the working stations (6, 7, 8, 9, 10) without any data connection between the working station (6, 7, 8, 9, 10) and the master computer (1) with the exception optionally of a single one as feedback station,
. transfer of working data from a workpiece carrier (4, 5) to a master computer (1) for monitoring purposes.

2. Method according to claim 1, **characterised in that** the virtual grid system is formed in the same way as a Cartesian system of coordinates (abscissa, ordinate, applicate [altitude]) and exhibits certain rules which no longer have to be obeyed expressly during the programming of the transfer system.

3. Method according to claims 1 or 2, **characterised in that** the programming of the transfer system exhibits the following essential steps:
. that the workpiece carrier (4, 5) exhibits an autonomous intelligence,
. that the road and block system (14) used (imitating the road system of Manhattan) defines fixed traffic rules which regulate the behaviour of the workpiece carriers (4, 5) before and after the working station (6, 7, 8, 9, 10),
. a saving in time and an essential saving in programming effort by dragging and dropping symbols which are in each case assigned to a working station (6, 7, 8, 9, 10) on a user interface (37), through which the time expended on configuration of the individual working stations (6, 7, 8, 9, 10) to be configured by the user is reduced substantially.

4. Method according to claims 1 to 3, **characterised in that** the coordinate system laid over the route exhibits the following first rule for construction of a coordinate grid (layout):
. horizontal lines are designated as "streets" (16), begin at 1 and rise by 1 in an upward direction, with the 1st street (16) beginning on the left at the bottom and running to the left,
. vertical lines are designated as "avenues" (15), begin at 1 and rise by 1 towards the right,
. the numbers of the streets (16) rise on odd-numbered avenues (15), the numbers of the avenues (16) rise on an even-numbered street (16),
. a rectangle which is formed between two streets (16) and two avenues (15) is designated as a "block" (17, 17a),
. an outward transfer within a block (17, 17a) goes back into the street (16) and is designated as a "business street" (18).

5. Method according to claims 1 to 4, **characterised in that** the coordinate system laid over the route (2, 2a, 2b) exhibits the following second rule for generation of a house number:
. the numbers directly on an avenue (15) or street (16) for each block (17, 17a) can only be 01 - 09; the numbers rise in the direction of travel;
. on business streets (18) which lie to the left of an avenue/street (15, 16) all the house numbers are odd (tens digit 11-19, 31-39, ...) ;
. on business streets (18) which lie to the right of an avenue/street (15, 16) all the house numbers are even (tens digit 21-29, 41-49, ...) ;
wherein for generation of a house number it is not important from where left or right is, but only that in a block (17, 17a) the even house numbers are formed on one side and the odd house numbers are formed on the other side.

6. Method according to claims 1 to 5, **characterised in that** the coordinate system laid over the route (2, 2a, 2b) exhibits the following third rule for the applicable regions of the individual elements:
. city: 1-15 = identification of a system
. level: 1-15 per city = level of a system
. via (crossing): 1-99 per city = street/avenue (15, 16) via which the station is reached
. house number: 1-99 per block = house number of the working station (17, 17a) (6, 7, 8, 9, 10)
. street (16): 1-99 per city =
. avenue (15): 1-99 per city =
. business street (18): 1-9 per block = = street/avenue/business street (16, 15, 18) on which the station lies
. operation: S, G, M, F = sequential, neutral, multiple, fixed
. BA code: 1-255 = working code for the machine
. index: 1-15 per operation = for combining of G and M operation.

7. Method according to claims 1 to 6, **characterised in that** the coordinate system laid over the route (2, 2a, 2b) exhibits the following fourth rule for construction of an address of a station:
. street/avenue number: = avenue (15) or street (16) on which the station is located
. city/level: = city/level in which the station is located
. house number: = house number of the station
. cross before: = street (16) or avenue (15) of the crossing before
. street/avenue type: = avenue (15) or street (16) on which the station is located.

8. Method according to claims 1 to 7, **characterised in that** the coordinate system laid over the route (2, 2a, 2b) exhibits the following fifth rule for construction of an address of a switch:
. street/avenue/business street number: = avenue/street (15, 16) or business street (18) which comes just after the switch
. city/level: = city/level which comes after the straight switch
. street/avenue/business street number: = avenue/street (15, 16) or business street (18) which comes when turning off after the switch
. city/level: = city/level which comes after turning off at the switch
. street/avenue/business street type: = whether an avenue/street (15, 16) or business street (18) comes when going straingt/turning off after, the switch;
wherein when turning off onto a business street (18) in the "turn off city/level part" the crossing is before.

9. Method according to claims 1 to 8, **characterised in that** the coordinate system laid over the route (2, 2a, 2b) exhibits the following sixth rule for construction of an address of a junction:
. street/avenue/business street number: = avenue/street (15, 16) or business street (18) which comes after the junction
. city/level: = city which comes after the junction
. street/avenue/business street type: = whether an avenue/street (15, 16) or business street (18) comes after the junction.

10. Method according to claims 1 to 9, **characterised in that** the coordinate system laid over the route (2, 2a, 2b) exhibits the following fixed and mandatory traffic rules which lead to a reduction in programming effort for the transfer system:
. the transfer system is only to be travelled in the clockwise direction;
. even-numbered avenues (15) run from north to south as one-way streets and odd-numbered avenues (15) run from south to north also as one-way streets;
. the streets (16) running at right angles to the avenues (15) intersect with the avenues (15) and there form blocks (17, 17a);
. even-numbered streets (16) run from west to east and odd-numbered streets (16) run from east to west and are in each case embodied as one-way streets;
. between the blocks there are business streets (18) which in the block (17, 17a) can bridge two working stations and thus form bypasses to the main roads which can only be travelled in the clockwise direction (in the direction of the main roads).

11. Method according to claims 1 to 10, **characterised in that** for programming of a route (2, 2a, 2b) use is made of only one coordinate of a working station (6, 7, 8, 9, 10) and/or switch which exhibits the form of a road address (crossing of 9th street, 5th avenue) and because of the integrated intelligence of the workpiece carriers (4, 5) leads these to the working stations (6, 7, 8, 9, 10).

12. Method according to claims 1 to 11, **characterised in that** the multiple arranged distance sensors on the workpiece carriers (4, 5) carry out a distance measurement from the particular workpiece carrier (4, 5) travelling behind to the workpiece carrier (4, 5) travelling ahead and establish a communication between the workpiece carriers (4, 5) which prevents a collision with a workpiece carrier (4, 5) travelling ahead or diverts the workpiece carrier (4, 5) travelling behind on the basis of the stored road system.

13. Method according to claims 1 to 12, **characterised in that** in the configuration phase a temporary data connection (11, 12, 13) is established between a master computer (1) and the working stations (6, 7, 8, 9, 10) through which their location in the road system and their working task is notified and programmed in so that a definite road address is fixed.

14. Method according to claims 1 to 13, **characterised in that** the inclusion of further working stations (6, 7, 8, 9, 10) is effected solely by fixing and configuring a road address.

15. Method according to claims 1 to 14, **characterised in that** the method in addition to the configuration of an individual routing system also allows the configuration of further autonomous routing systems, or connects these with one another endlessly by means of travel connections, through which different transfer system levels are also formed.

16. Method according to claims 1 to 15, **characterised in that** each individual working station (6, 7, 8, 9, 10) is only assigned a single working procedure and the routing system is configured by dragging and dropping the respective working stations (6, 7, 8, 9, 10) on a user interface (37) and simply arranging the working stations (6, 7, 8, 9, 10) next to one another, through which the time sequence (38) of working is defined.

17. Method according to claims 1 to 16, **characterised in that** the routing system exhibits a multiple arrangement (39) of working stations (6, 7, 8, 9, 10) through which working procedures of the same kind are available for a plurality of workpiece carriers (4, 5) at the same time.

18. Method according to claims 1 to 17, **characterised in that** the time sequence (38) of the working procedures of a workpiece carrier (4, 5) can be freely assigned to the working stations (6, 7, 8, 9, 10).

19. Method according to claims 1 to 18, **characterised in that** the transfer system exhibits repair stations which carry out a repair on a workpiece which has not been worked according to the standard or as required on a workpiece carrier and return it to the transfer system after completion of the repair.

20. Method according to claims 1 to 19, **characterised in that** every individual working station (6, 7, 8, 9, 10) with its programmed working task and location in the routing system is assigned a symbol which is used to arrange the desired time sequence (38) by dragging and dropping on a user interface.

21. Method according to claims 1 to 20, **characterised in that** after the arrangement of the symbols on the user interface, a starting signal is given and the workpiece carrier (4, 5) travels to a first working station (6, 7, 8, 9, 10) and there receives the data of the control programme forming the complete working order of the workpiece carrier (4, 5) for the same workpieces and working procedures just once for the entire operating time of the transfer system.

22. Method according to claims 1 to 21, **characterised in that** the method comprises a plausibility check for the workpiece carrier (4, 5) for the following working station (6, 7, 8, 9, 10), guaranteeing travelling solely in the predetermined direction, the preferred avoidance of business streets (18) or the avoidance of travelling the wrong way on one-way streets.

23. Method according to claims 1 to 22, **characterised in that** after a predetermined waiting time in front of an occupied working station (6, 7, 8, 9, 10) is exceeded, the workpiece carrier (4, 5) travels autonomously to the next free working station (6, 7, 8, 9, 10) of the same kind in the predetermined transfer system.

## Revendications

1. Procédé de mise en oeuvre d'un système de transfert de pièces, étant précisé que le système de transfert est un système à glissière avec au moins un porte-pièce (4, 5) qui circule le long d'un parcours (2, 2a, 2b) jusqu'à au moins un poste de traitement (6, 7, 8, 9, 10), étant précisé que le porte-pièce (4, 5), comporte plusieurs capteurs de distance, et possède une intelligence qui est conçue pour être configurable à l'aide d'une liaison de données (11, 12, 13), **caractérisé en ce que** le système de transfert est configurable à l'aide, d'un logiciel de commande, étant précisé que la configuration est basée sur un système de quadrillage virtuel placé sur les stations de traitement (6, 7, 8, 9, 10), qui correspond aux règles de la circulation d'un système routier d'une grande ville, étant précisé que le procédé comporte les étapes de procédé suivantes :
• définition des paramètres de chaque station de traitement individuelle (6, 7, 8, 9, 10) et éventuellement de chaque aiguille, s'il y en a,
• définition des points de position de la station de traitement (6, 7, 8, 9, 10) d'après le chiffre 1 sur un système routier (14) en plaçant un système de quadrillage virtuel d'une carte routière sur les stations de traitement (6, 7, 8, 9, 10) et les aiguilles,
• définition du système routier (14) de telle sorte que des règles de circulation définies doivent être respectées,
• configuration unique des stations de traitement individuelles (6, 7, 8, 9, 10) et des aiguilles grâce à l'établissement d'une liaison de données (11, 12, 13) avec un ordinateur pilote (1), de sorte que les croisements routiers, blocs (17, 17a) et rues d'activité (18) individuels soient fixés,
• suppression de la liaison de données (11, 12, 13) avec les stations de traitement individuelles (6, 7, 8, 9, 10) et établissement d'une liaison de données avec au moins un porte-pièce (4, 5),
• inscription du programme de traitement sur le porte-pièce (4, 5),
• démarrage du système de traitement de pièce avec amenée des porte-pièce individuels (4, 5) jusqu'aux stations de traitement (6, 7, 8, 9, 10) sans liaison de données entre la station de traitement (6, 7, 8, 9, 10) et l'ordinateur pilote (1), sauf éventuellement une seule comme station de réponse,
• transfert de données de traitement d'un porte-pièce (4, 5) vers un ordinateur pilote (1) à des fins de contrôle.

2. Procédé selon la revendication 1, **caractérisé en ce que** le système de quadrillage virtuel est formé à la manière d'un système de coordonnées cartésiennes (abscisse, ordonnée, cote) et comporte des règles définies qui ne doivent plus être respectées spécialement lors de la programmation du système de transfert.

3. Procédé selon les revendications 1 ou 2, **caractérisé en ce que** la programmation du système de transfert comporte les étapes essentielles suivantes :
• les porte-pièce (4, 5) possèdent une intelligence autonome
• le système de rues et de blocs (14) utilisé (copié sur le système de rues de Manhattan) définit des règles de circulation fixes qui régissent le comportement des porte-pièce (4, 5) avant et après la station de traitement (6, 7, 8, 9, 10)
• une économie de temps et une économie importante de dépense de programmation en faisant glisser sur une surface d'utilisateur (37) et en supprimant de celle-ci des symboles qui sont associés chacun à une station de traitement (6, 7, 8, 9, 10), ce qui réduit nettement le déroulement temporel de la configuration des stations de traitement individuelles (6, 7, 8, 9, 10) à configurer par l'utilisateur.

4. Procédé selon les revendications 1 à 3, **caractérisé en ce que** le système de coordonnées situé sur le parcours comporte la première règle suivante pour construire un quadrillage de coordonnées (plan) :
• les lignes horizontales sont appelées "streets" (16), en commençant à 1 et en augmentant de 1 vers le haut, étant précisé que la 1^{ère} street (16) commence en bas à gauche et s'étend vers la gauche,
• les lignes verticales sont appelées "avenues" (15), en commençant à 1 et en augmentant de 1 vers la droite,
• les numéros des streets (16) augmentent sur les avenues (15) impaires, et les numéros des avenues (15) augmentent sur une rue (16) paire,
• un rectangle qui se forme entre deux streets (16) et deux avenues (15) est appelé "bloc" (17, 17a),
• une sortie à l'intérieur d'un bloc (17, 17a) ramène dans la rue (16) et est appelée "business street" (18).

5. Procédé selon les revendications 1 à 4, **caractérisé en ce que** le système de coordonnées placé sur le parcours (2, 2a, 2b) présente la deuxième règle suivante pour générer un numéro de maison :
• directement sur une avenue (15) ou une rue (16), il ne peut y avoir pour chaque bloc (17, 17a) que les numéros 01-09. Les numéros augmentent dans le sens du déplacement.
• sur les business-streets (18) qui se trouvent à gauche d'une ave/str (15, 16), tous les numéros de maison sont impairs (dizaines 11-19, 31-39,...)
• sur les business-streets (18) qui se trouvent à droite d'une ave/str (15, 16), tous les numéros de maison sont pairs (dizaines 21-29, 41-49),...),
étant précisé que pour générer un numéro de maison, ce qui est important, c'est non pas d'où on part, à gauche ou à droite, mais c'est seulement le fait que dans un bloc (17, 17a) soient formés d'un côté les numéros pairs, et de l'autre côté les numéros impairs.

6. Procédé selon les revendications 1 à 5, **caractérisé en ce que** le système de coordonnées placé sur le parcours (2, 2a, 2b) comporte la troisième règle suivante pour les zones valables des éléments individuels :
• City : 1-15 identification d'un système
• Level : 1-15 par City étage d'un système
• Via (croisement) 1-99 par City par quelle str/ave (15, 16) on atteint la station
• n° de maison 1-99 par bloc n° de la station de traitement (17, 17a)(6, 7, 8, 9, 10)
• streets (16) : 1-99 par City)
• avenues (16) : 1-99 par City) - sur quelle str/ave/B-str. (16, 15, 18) la station se trouve
• business-str (18) :1-9 par bloc)
• mode : S,G,M,F séquentiel, indifférent, multiple, fixe
• code traitement 1-255 code de traitement pour la machine
• index : 1-15 par opération pour la combinaison des modes G et M.

7. Procédé selon les revendications 1 à 6, **caractérisé en ce que** le système de coordonnées placé sur le parcours (2, 2a, 2b) comporte la quatrième règle suivante pour construire une adresse d'une station :
• n° de str/ave : sur quelle ave (15) ou str (16) la station se trouve
• City/level : dans quelle ville/niveau la station se trouve
• n° de maison le numéro de la station
• intersection avant : c'est la str (16) ou ave (15) du croisement d'avant
• type de str/ave : sur quelle ave (15) ou str (16) la station se trouve.

8. Procédé selon les revendications 1 à 7, **caractérisé en ce que** le système de coordonnées placé sur le parcours (2, 2a, 2b) comporte la cinquième règle suivante pour construire une adresse d'une aiguille :
• n° de str/ave/b-str : quelle Ave/str (15, 16) ou business-str. (18) vient juste après l'aiguille
• City/Level : quelle City/Level vient après l'aiguille paire
• n° de Str/Ave/b-str : quelle Ave/str (15, 16) ou business-str (18) vient quand on tourne après l'aiguille
• City/Level : quelle City/Level vient quand on tourne après l'aiguille
• type de str/ave/b-str : est-ce qu'une ave/str (15, 16) ou business-str (18) vient juste après/quand on tourne après l'aiguille,
étant précisé que quand on tourne dans une business-str (18) dans la "partie tourner City/Level" le croisement se trouve devant.

9. Procédé selon les revendications 1 à 8, **caractérisé en ce que** le système de coordonnées placé sur le parcours (2, 2a, 2b) comporte la sixième règle suivante pour construire une adresse d'un embranchement :
• n° de str/ave/b-str : quelle ave/str (15, 16) ou business-str (18) vient après l'embranchement
• City/Level : quelle City vient après l'embranchement
• type de str/ave/b-str : est-ce qu'une ave/str (15, 16) ou business-str (18) vient après l'embranchement.

10. Procédé selon les revendications 1 à 9, **caractérisé en ce que** le système de coordonnées placé sur le parcours (2, 2a, 2b) comporte les règles de circulation fixées et à respecter suivantes, qui forment une dépense de programmation réduite pour le système de transfert :
• le système de transfert doit être emprunté seulement dans le sens des aiguilles d'une montre,
• les avenues (15) paires s'étendent du nord au sud sous la forme de rues à sens unique, et les avenues (15) impaires s'étendent du sud au nord, également sous la forme de rues à sens unique.
• les streets (16) qui s'étendent perpendiculairement aux avenues (15) croisent les avenues (15) et forment à ces endroits des blocs (17, 17a).
• les streets (16) paires s'étendent d'ouest en est et les streets (16) impaires s'étendent d'est en ouest et sont conçues comme des rues à sens unique.
• entre les blocs, il y a des rues commerçantes (18) qui peuvent couvrir deux stations de traitement, dans le bloc (17, 17a), et qui forment ainsi des dérivations vers les rues principales, qui peuvent être empruntées seulement dans le sens des aiguilles d'une montre (dans le sens desdites rues principales).

11. Procédé selon les revendications 1 à 10, **caractérisé en ce que** pour la programmation d'un parcours (2, 2a, 2b), on utilise seulement une coordonnée d'une station de traitement (6, 7, 8, 9, 10) et/ou d'une aiguille, qui présente la forme d'une adresse de rue (croisement 9^{ème} rue, 5^{ème} avenue) et qui amène les porte-pièce (4, 5), grâce à l'intelligence intégrée de ceux-ci, jusqu'aux stations de traitement (6, 7, 8, 9, 10).

12. Procédé selon les revendications 1 à 11, **caractérisé en ce que** les capteurs de distance disposés de manière multiple sur les porte-pièce (4, 5) effectuent une mesure de distance entre le porte-pièce (4, 5) de derrière et le porte-pièce (4, 5) de devant et forment une communication entre les porte-pièce (4, 5), qui empêche une collision avec le porte-pièce (4, 5) de devant ou dévie le porte-pièce (4, 5) de derrière sur la base du système routier entré en mémoire.

13. Procédé selon les revendications 1 à 12, **caractérisé en ce que** lors de la phase de configuration, la position des stations de traitement (6, 7, 8, 9, 10) dans le système routier et leur tâche de traitement sont communiquées à l'aide d'une liaison de données (11, 12, 13) temporaire entre un ordinateur pilote (1) et lesdites stations de traitement (6, 7, 8, 9, 10), et sont programmées, moyennant quoi une adresse de rue univoque est fixée.

14. Procédé selon les revendications 1 à 13, **caractérisé en ce que** l'ajout d'autres stations de traitement (6, 7, 8, 9, 10) est formé seulement à l'aide de la fixation et de la configuration d'une adresse de rue.

15. Procédé selon les revendications 1 à 14, **caractérisé en ce que** le procédé, outre la configuration d'un système d'itinéraire individuel, forme aussi la configuration d'autres systèmes d'itinéraire autonomes, ou relie ceux-ci sans fin à l'aide de liaisons routières, moyennant quoi différents niveaux de système de transfert (Level) sont également formés.

16. Procédé selon les revendications 1 à 15, **caractérisé en ce qu'**à chaque station de traitement individuelle (6, 7, 8, 9, 10) est associée seulement une procédure de traitement individuelle, et qu'à l'aide d'un glissement, sur une surface d'utilisateur (37), de la station de traitement (6, 7, 8, 9, 10) respective, le modèle du système d'itinéraire est formé seulement par alignement des stations de traitement (6, 7, 8, 9, 10), moyennant quoi l'ordre chronologique (38) du traitement est défini.

17. Procédé selon les revendications 1 à 16, **caractérisé en ce que** le système d'itinéraire comporte une disposition multiple (39) de stations de traitement (6, 7, 8, 9, 10), moyennant quoi on dispose de procédures de traitement identiques pour plusieurs porte-pièce (4, 5) en même temps.

18. Procédé selon les revendications 1 à 17, **caractérisé en ce que** l'ordre chronologique (38) des procédures de traitement d'un porte-pièce (4, 5) est apte à être associé librement aux stations de traitement (6, 7, 8, 9, 10).

19. Procédé selon les revendications 1 à 18, **caractérisé en ce que** le système de transfert comporte des stations de réparation qui réalisent une réparation d'une pièce qui n'a pas été traitée conformément à la norme ou au souhait, sur un porte-pièce (4, 5), et qui ramènent celui-ci dans le système d'itinéraire une fois que la réparation est effectuée.

20. Procédé selon les revendications 1 à 19, **caractérisé en ce qu'**il est prévu, associé à chaque station de traitement (6, 7, 8, 9, 10) individuelle avec sa tâche de traitement programmée et sa position dans le système d'itinéraire, un symbole qui permet, en étant glissé sur une surface d'utilisateur (37), de disposer l'ordre chronologique (38) souhaité.

21. Procédé selon les revendications 1 à 20, **caractérisé en ce qu'**après la disposition des symboles sur la surface d'utilisateur, le porte-pièce (4, 5) approche, grâce au déclenchement d'un signal de démarrage, d'une première station de traitement (6, 7, 8, 9, 10), où il reçoit une seule fois pour toute la durée d'utilisation du système de transfert les données du programme de commande, qui forment tout l'ordre de travail pour le porte-pièce (4, 5), pour des pièces et des procédures de traitement constantes.

22. Procédé selon les revendications 1 à 21, **caractérisé en ce que** le procédé forme un contrôle de plausibilité du porte-pièce (4, 5) pour la station de traitement (6, 7, 8, 9, 10) suivante, étant précisé qu'il est garanti que la circulation se fait dans un sens de déplacement prédéfini, que les business-streets (18) ne sont pas empruntées, de préférence, ou que la circulation en sens inverse par rapport aux rues à sens unique n'est pas autorisée.

23. Procédé selon les revendications 1 à 22, **caractérisé en ce que** le porte-pièce (4, 5), après dépassement d'un temps d'attente prédéfini, avant une station de traitement (6, 7, 8, 9, 10) occupée, approche de manière autonome la station de traitement (6, 7, 8, 9, 10) la plus proche, libre et identique dans le système de transfert prédéfini.
